Europäisches Patentamt

European Patent Office

Office européen des brevets

(19)

(11) Numéro de publication: **0 068 976**
**A1**

## (12) DEMANDE DE BREVET EUROPEEN

(21) Numéro de dépôt: **82401093.8**

(22) Date de dépôt: **15.06.82**

(51) Int. Cl.³: **G 01 K 7/04**

(30) Priorité: **17.06.81 FR 8111929**

(43) Date de publication de la demande: **05.01.83**
**Bulletin 83/1**

(84) Etats contractants désignés: **AT BE CH DE FR GB IT LI
LU NL SE**

(71) Demandeur: **MECILEC, 91 bis, rue du Cherche-Midi,
F-75006 Paris (FR)**

(72) Inventeur: **Berger, Jean-Claude, 36, Route de St
Ambroix, F-36100 Issoudun (FR)**
Inventeur: **Hatchadour, Christian, 17, rue des Jacinthes,
F-36100 Issoudun (FR)**

(74) Mandataire: **Schrimpf, Robert et al, Cabinet
Regimbeau 26, Avenue Kléber, F-75116 Paris (FR)**

(54) Elément à couple thermo-électrique.

(57) La présente invention concerne un élément à couple
thermo-électrique.

Il s'agit d'un élément comprenant un tube protecteur
isolant et deux fils conducteurs nus passant côte à côte à
l'intérieur du tube et s'y rejoignant pour former la jonction
chaude du couple, dans lequel la paroi du tube comporte au
moins un enfoncement situé entre les deux fils, caractérisé
en ce que la paroi du tube (10) comporte d'un côté deux
enfoncements (20, 22) distants l'un de l'autre dans la longueur du tube et, du côté opposé, un troisième enfoncement (24) situé à un niveau intermédiaire entre les niveaux
des deux enfoncements.

Application aux dispositifs de mesure de la température de bains de metaux en fusion.

"ELEMENT A COUPLE THERMO-ELECTRIQUE"

La présente invention concerne un élément à couple thermo-électrique.

Elle concerne plus particulièrement les éléments à couple thermo-électrique qui comprennent un tube protecteur isolant et deux fils conducteurs nus passant côte à côte à l'intérieur du tube et s'y rejoignant pour former la jonction chaude du couple.

C'est le cas notamment des couples thermoélectriques consommables en fils fins utilisés dans les dispositifs de mesure par immersion de la température des bains de métaux en fusion et dans lesquels un tube protecteur isolant, par exemple en quartz ou en verre spécial du type vycor, fermé à l'une de ses extrémités, protège les fils du couple qui passent par l'extrémité ouverte du tube et qui sont nus à l'intérieur du tube où ils se rejoignent pour former la jonction chaude du couple thermo-électrique.

La difficulté essentielle que l'on rencontre avec de tels éléments est d'assurer la séparation des deux fils en dehors de leur jonction.

Ce problème a été résolu, conformément au brevet FR 1 600 350 en prévoyant que la paroi du tube comporte un enfoncement situé entre les deux fils.

Le but essentiel de la présente invention est de réaliser un élément à couple thermo-électrique du genre ci-dessus, dans lequel la séparation des deux fils est encore améliorée.

Un autre but de la présente invention est de réaliser des éléments à couple thermo-électrique du genre ci-dessus, permettant de diminuer les déchets de fabrication et de supprimer pratiquement tout contrôle de fabrication.

Pour cela, la présente invention concerne un élément à couple thermo-électrique comprenant un tube protecteur isolant et deux fils conducteurs nus passant côte à côte à l'intérieur du tube et s'y rejoignant pour former la jonction chaude du couple, dans lequel la paroi du tube comporte au moins un enfoncement situé entre les deux fils, caractérisé en ce que la paroi du tube comporte d'un côté deux enfoncements distants l'un de l'autre dans la longueur du tube et, du côté opposé, un troisième enfoncement situé à un niveau intermédiaire entre les niveaux des deux enfoncements.

Selon une autre caractéristique de l'invention, les trois enfoncements sont situés sensiblement au tiers, à la moitié et aux deux tiers de la longueur du tube.

Il est préférable que les enfoncements situés d'un même côté soient obliques par rapport à l'axe du tube.

En outre, le troisième enfoncement s'étendra avantageusement de l'un à l'autre de deux bords opposés du tube, transversalement à l'axe du tube.

D'autres caractéristiques et avantages de l'invention seront mieux compris à la lecture de la description qui va suivre et qui se réfère au dessin annexé, sur lequel :

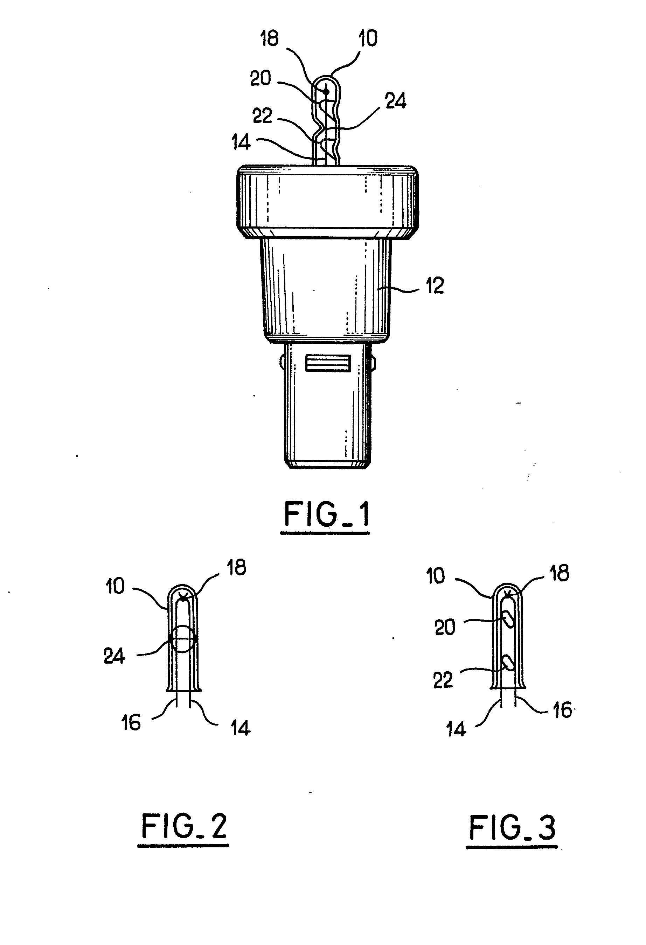

. La figure 1 montre un élément conforme à la présente invention en vue de côté, le plan de vue étant parallèle aux directions des enfoncements du tube ;

. La figure 2 est une vue de côté du tube de l'élément de la figure 1, prise du côté comportant un seul enfoncement ;

0068976

. la figure 3 est une vue de côté du tube de l'élément de la figure 1, prise du côté qui comporte les deux enfoncements.

L'élément à couple thermo-électrique représenté sur la figure 1, comporte un tube protecteur isolant 10, par exemple un tube en quartz, monté sur une structure de support 12, et deux fils conducteurs nus 14 et 16 passant côte à côte à l'intérieur du tube et s'y rejoignant pour former la jonction chaude 18 du couple.

Pour améliorer la séparation des deux fils 14 et 16 à l'intérieur du tube 10, l'invention prévoit de réaliser trois enfoncements dans la paroi du tube.

Sur le côté du tube 10, qui apparaît sur la droite de la figure 1 et qui est représenté sur la figure 3, la paroi comporte deux enfoncements 20 et 22 distants l'un de l'autre dans la longueur du tube. Sur le côté opposé, c'est-à-dire celui qui apparaît sur le côté gauche de la figure 1 et qui est représenté sur la figure 2, la paroi comporte un troisième enfoncement 24 situé à un niveau intermédiaire entre les niveaux des deux enfoncements 20 et 22.

Comme cela apparaît sur les figures, les trois enfoncements 20, 24 et 22 sont situés respectivement et sensiblement au tiers, à la moitié et aux deux tiers de la longueur du tube.

Comme cela apparaît sur la figure 3, les enfoncements 20 et 22 sont très inclinés côté pénétration du couple, ce qui permet de faciliter le passage de la jonction chaude lors de l'insertion du couple dans le tube 10 dans lequel les enfoncements auront déjà été effectués au préalable. En outre, les enfoncements 20 et 22 permettent d'améliorer la séparation entre les deux fils 14 et 16 grâce à leur forme oblique.

Comme cela apparaît le mieux sur la figure 2, l'enfoncement 24 s'étend de l'un à l'autre de deux bords opposés du tube 10, transversalement à l'axe du tube. Cet enfoncement intermédiaire d'une part permet essentiellement de rabattre le coupe vers la base des deux autres enfoncements 20 et 22 pour éviter la formation d'une jonction chaude plus bas par affaissement du couple lors de l'immersion de l'ensemble dans un bain de métal en fusion (voir fig. 1 et 3), et d'autre part évite le vrillage du couple qui garde une certaine élasticité.

Les trois enfoncements sont réalisés de telle manière qu'il reste toujours un passage à l'intérieur du tube, entre l'extrémité intérieure d'un enfoncement et la paroi intérieure du tube disposée en vis à vis. Ceci permet de ménager un passage pour l'insertion du couple, une fois le tube fabriqué. Ceci permet de réaliser les tubes avec leurs enfoncements, ceux-ci étant obtenus par poinçonnage du tube à chaud, puis d'insérer le couple à l'intérieur du tube. Bien entendu, il est possible, si on le désire, d'insérer d'abord le couple dans le tube, puis de réaliser des enfoncements, par exemple par poinçonnage du tube à chaud.

Il est préférable de réaliser d'abord les trois enfoncements du tube puis d'insérer le couple. En effet, ceci évite d'effectuer un contrôle visuel du tube et des fils du couple thermo-électrique, car d'une part, il n'y a plus les risques de détérioration du couple pendant la période de poinçonnage (la température de fusion du platine étant proche du point de ramolissement du quartz), d'autre part, la zone de chauffage du tube est plus importante, ce qui permet un déplacement de volume de quartz plus important limitant les possibilités de rupture de la paroi des enfoncements.

REVENDICATIONS

1. Elément à couple thermo-électrique comprenant un tube protecteur isolant et deux fils conducteurs nus passant côte à côte à l'intérieur du tube et s'y rejoignant pour former la jonction chaude du couple, dans lequel la paroi du tube comporte au moins un enfoncement situé entre les deux fils, caractérisé en ce que la paroi du tube (10) comporte d'un côté deux enfoncements (20, 22) distants l'un de l'autre dans la longueur du tube, et du côté opposé, un troisième enfoncement (24) situé à un niveau intermédiaire entre les niveaux des deux enfoncements.

2. Elément selon la revendication 1, caractérisé par le fait que les trois enfoncements (20, 22, 24) sont situés sensiblement au tiers, à la moitié et aux deux tiers de la longueur du tube.

3. Elément selon l'une des revendications 1 et 2, caractérisé par le fait que lesdits enfoncements (20, 22) situés d'un même côté sont obliques par rapport à l'axe du tube.

4. Elément selon l'une des revendications 1 à 3, caractérisé par le fait que ledit troisième enfoncement (24) s'étend de l'un à l'autre de deux bords opposés du tube, transversalement à l'axe du tube.

0068976

1 / 1

FIG_1

FIG_2

FIG_3

Office européen
des brevets

**RAPPORT DE RECHERCHE EUROPEENNE**

Numéro de la demande

EP 82 40 1093

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 359 407 (THERMAL SYNDICATE LTD.) <br> * titre; figures 1,2,3,4; page 2, ligne 38 - page 4, ligne 14 * | 1 | G 01 K 7/04 |
| Y | FR-A-1 473 466 (DEGUSSA, VORMALS ROESSLER) <br> * figure 4; page 4, paragraphe 4 * | 1,2 | |

---

DOMAINES TECHNIQUES
RECHERCHES (Int. Cl. ³)

G 01 K

Le présent rapport de recherche a été établi pour toutes les revendications

| Lieu de la recherche | Date d'achèvement de la recherche | Examinateur |
|---|---|---|
| LA HAYE | 01-10-1982 | VISSER F.P.C. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

 

& : membre de la même famille, document correspondant

OEB Form 1503. 03.82